# EUROPÄISCHE PATENTSCHRIFT

(11) **EP 1 135 744 B1**
(45) Veröffentlichungstag und Bekanntmachung des Hinweises auf die Patenterteilung: **12.02.2003**
(21) Anmeldenummer: 99973337.1
(22) Anmeldetag: 23.11.1999
(51) Int. Cl.: G06K 11/08

(54) **ANZEIGEVORRICHTUNG MIT BERÜHRUNGSSENSOR**
INDICATING DEVICE WITH TOUCH SENSOR
DISPOSITIF D'AFFICHAGE DOTE D'UN CAPTEUR TACTILE

(30) Priorität: 04.12.1998 DE 19856007
(43) Veröffentlichungstag der Anmeldung: 26.09.2001
(73) Patentinhaber: Bayer Aktiengesellschaft, 51368 Leverkusen (DE)
(72) Erfinder: JACOBSEN, Wolfgang, D-51069 Köln (DE); NEIGL, Ralf, D-51373 Leverkusen (DE)
(86) Internationale Anmeldenummer: EP9908998
(87) Internationale Veröffentlichungsnummer: WO00034915

(56) Entgegenhaltungen:
- EP-A- 0 458 513
- US-A- 4 254 333
- US-A- 4 868 551

## Beschreibung

Die vorliegende Erfindung betrifft eine Anzeigevorrichtung, die mit einem neuen Berührungssensor kombiniert ist.

Vorrichtungen, die Informationen anzeigen und die Berührung der Anzeigefläche oder eines Teilbereichs der Anzeigefläche in ein elektrisches Signal umwandeln, sind bekannt. Sie werden häufig als Touch Screen bezeichnet (siehe z.B. Firmenbroschüre Fa. Leukhardt Systemelektronik, Tuttlingen: LS-IC - Die leistungsstarke Industriecomputer-Familie, 1998).

Touch-Screens dienen überwiegend als Eingabegeräte für Computer und elektronische Mess- und Regelungsgeräte, insbesondere in Produktionsbetrieben und ähnlichen Umgebungen, in denen herkömmliche Computer-Eingabegeräte wie eine Maus oder eine Tastatur wegen der starken Staub- und Schmutzbelastung sehr schnell verschleißen. Das auf den Touch-Screens dargestellte Bild besteht häufig aus einigen Erläuterungstexten und einer Reihe von Feldern, deren Berührung einer bestimmten Daten- oder Befehlseingabe entspricht.

Bekannte Touch-Screens sind z.B. aufgebaut aus Flüssigkristallanzeigen (LCD = liquid crystal display) oder Kathodenstrahlröhren (CRT = cathode ray tube), und einer zusätzlichen berührungssensitiven Vorrichtung.

Diese berührungssensitive Vorrichtung arbeitet zum Beispiel auf optischer Basis. Eine Lichtschranke, bestehend aus einer Lichtquelle und einem Photoempfänger, wird bei ausreichender Annäherung mit dem Finger oder einem anderen lichtundurchlässigen Objekt an die Berührungsfläche der Touch-Screen unterbrochen. Diese Unterbrechung erzeugt ein Signal. Soll die Berührung bestimmter Teilflächen auf einer Screen unterschiedliche Signale erzeugen, so besteht das Sensorsystem aus zwei Reihen von Lichtschranken, die zueinander gekreuzt entlang von zwei Seiten der Screen angeordnet sind. Jeder Lichtquelle liegt ein Photoempfänger gegenüber (US 5 179 369). Ein solches System ist komplex und daher aufwendig in der Herstellung und störanfällig im Dauerbetrieb, da die in einem Rahmen um die Berührungsfläche angeordneten Elemente der Lichtschranke, nämlich die Lichtquellen und die Photoempfänger, leicht verschmutzen.

Die EP-A-0 458 513 beschreibt eine Anzeigevorrichtung mit Berührungssensor, wobei die elektrochrome Rolle sich zwischen einer transparenten Deck- und Trägerplatte befindet, wobei auf die Trägerplatte ein Photosensor montiert ist, der eingehendes Umgebungslicht detektiert.

Die US-A-4 868 551 beschreibt eine berührungssensitive Vorrichtung, bei der Licht an der Stirnseite einer Platte eingestrahlt und die Lichtstreuung bei Berührung ebenfalls über die Stirnseite detektiert wird.

Die EP-A-0 855 612 betrifft eine Flüssigkristallzelle, bei der der Hell/Dunkel-Kontrast dadurch erhöht wird, dass auf den einander zugewandten Seiten der Oberund Unterplatte der Flüssigkristallzelle eine Orientierungsschicht und auf den einander abgewandten Seiten eine Polarisationsfolie aufgebracht ist.

Die US-A-5 640 483 beschreibt eine Flüssigkristallanzeige, bei der die Hintergrundbeleuchtung über ein System auf der Basis einer internen Totallichtreflexion ausgeführt wird.

Eine weitere Möglichkeit, berührungssensitive Vorrichtungen herzustellen, sind drucksensitive Folien (US 4 444 998). Drucksensitive Folien bestehen aus mindestens zwei Schichten, einer elektrisch leitfähigen Schicht und einer Widerstandsschicht. Ohne äußere Einflüsse stehen diese beiden Schichten nicht in elektrischem Kontakt miteinander. Erst wenn an einer Stelle durch Berührung Druck auf die Folie ausgeübt wird, wird ein elektrischer Kontakt hergestellt. Die Widerstandsschicht dieser im allgemeinen rechteckigen Folie ist über die ganze Länge jeder ihrer vier Kanten mit einem gut leitfähigen Kontakt versehen. Die leitfähige Schicht ist nur an einer Stelle kontaktiert. Es wird abwechselnd an die beiden kürzeren Kanten und an die beiden längeren Kanten der Widerstandsschicht eine elektrische Spannung angelegt. Wenn durch Berührung der Folie an einer bestimmten Stelle der Kontakt zwischen der leitfähigen Schicht und Widerstandsschicht hergestellt wird, tritt am Kontakt der leitfähigen Schicht eine zwischen zwei Werten alternierende Spannung auf. Aus diesen beiden Spannungswerten können über einen Kalibrierschritt, in dem der Spannungsabfall in der Widerstandsfolie in Abhängigkeit vom Abstand zu den kontaktierten Kanten eingeht, die Koordinaten der Berührungsstelle berechnet werden. Ein Problem bei dieser Art von Touch-Screen ist die Alterungsempfindlichkeit. Wegen der ständigen mechanischen Belastung während des Gebrauchs und wegen thermischer und strahlungsbedingter Belastungen verändern sich die Folien. Sie verspröden zum Beispiel.

Die erfindungsgemäße Anzeigevorrichtung mit Berührungssensor besteht aus einer an sich bekannten elektrochromen Zelle oder einer Flüssigkristallzelle, die sich zwischen zwei transparenten Platten, einer transparenten Deckplatte und einer transparenten Trägerplatte befindet. An mindestens einer der Stirnflächen der transparenten Deckplatte ist eine Strahlungsquelle angeordnet ist, deren Licht in die Deckplatte eintritt und diese ausleuchtet. An der Trägerplatte ist mindestens ein Photoempfänger montiert ist, in dessen photoempfindlichem Raumwinkelbereich ein Teil oder die gesamte Deckplattenfläche liegt.

Das Licht breitet sich von der Strahlungsquelle über die angestrahlte Stirnfläche der Deckplatte durch Totalreflexion an den Grenzflächen der Deckplatte aus (Pedrotti, F.L.; Pedrotti, L.S.; Introduction to Optics; S. 38-40). Bei Berührung der Deckplattenoberfläche mit einem Finger entstehen Kontaktflächen zwischen der Platte und der überwiegend aus Phosphorlipiden bestehenden obersten Hautschicht. Die Lipidschicht hat einen Brechungsindex im Bereich 1,5 bis 1,6. Dieser Werte liegt in der Nähe des Brechungsindexes einer transparenten Platte oder sogar darüber, so dass der größte Teil des ohne Berührung totalreflektierten Lichtes an der berührten Stelle der Plattenoberfläche nicht mehr total reflektiert wird, sondern in die Haut eindringt und in ihr stark gestreut wird. In der Berührungszone bildet sich ein heller Fleck, der vom Photoempfänger an der gegenüber Trägerplatte der Anzeigevorrichtung detektiert wird. Die Ausdehnung und die Helligkeit dieses Flecks variiert in Abhängigkeit vom Berührungsdruck. Durch eine geeignet konzipierte Auswerteelektronik lässt sich die Empfindlichkeit des Berührungssensors auf ein gewünschtes Maß einstellen.

Eine elektrochrome Zelle, die in der erfindungsgemäßen Vorrichtung eingesetzt werden kann, ist zum Beispiel aus US 3 451 741 bekannt. Sie besteht aus zwei transparenten Platten, die im Folgenden Oberplatte und Unterplatte genannt werden, die durch einen Dichtungsring zu einer Zelle zusammengefügt sind. In dem so gebildeten Zellvolumen befindet sich das elektrochrome Medium. Die Ober- und Unterplatte sind auf ihren dem Medium zugewandten Seiten mit einer transparenten elektrisch leitfähigen Beschichtung versehen.

Eine Flüssigkristallzelle, die in der erfindungsgemäßen Vorrichtung eingesetzt werden kann, ist aus Birenda Bakadur "Liquid Crystal Displays", Verlag Gordon and Breach New York and London 1984 bekannt. Die Flüssigkristallzelle besteht aus zwei transparenten Platten, die im Folgenden Oberplatte und Unterplatte genannt werden, zwischen denen sich das flüssigkristalline Medium befindet. Auf ihren einander zugewandten Seiten sind die Platten mit einer transparenten elektrisch leitfähigen Beschichtung und mit einer Orientierungsschicht versehen. Die Orientierungsschicht dient zur Ausrichtung der Flüssigkristalle. An ihren voneinander abgewandten Seiten sind die transparente Ober- und Unterplatte mit einer Polarisationsfolie versehen. Eventuell kann zur Korrektur von Farbfehlern noch eine Retarderfolie zwischen die Ober- bzw. Unterplatte und die Polarisationsfolie eingefügt werden.

Die Oberplatte der elektrochromen Zelle oder der Flüssigkristallzelle kann mit der Deckplatte und die Unterplatte mit der Trägerplatte identisch sein.

Die Anzeigevorrichtung kann als reflektive Anzeige ohne eigene Lichtquelle ausgestaltet sein. In diesem Fall weist die Trägerplatte vorzugsweise auf ihrer Innenseite eine Beschichtung auf, die das sichtbare Licht überwiegend reflektiert, während sie für das Licht, das von der Strahlungsquelle an der Deckplatte emittiert wird, überwiegend transparent ist. Alternativ kann die reflektierende Beschichtung bevorzugt im Zentrum des photoempfindlichen Raumwinkelbereichs des Photodetektors eine für das Licht der Strahlungsquelle, die die Deckplatte beleuchtet, transparente Stelle enthalten.

Die Anzeigevorrichtung kann als transmissive Anzeige mit einer zusätzlichen Lichtquelle zur Hinterleuchtung der Anzeige ausgestaltet sein. In diesem Fall weist die Trägerplatte vorzugsweise auf ihrer Innenseite eine Beschichtung auf, die sowohl für das sichtbare Licht der zusätzlichen Lichtquelle zur Hinterleuchtung wie auch für das Licht, das von der Strahlungsquelle an der Deckplatte emittiert wird, überwiegend transparent ist. Die beiden Spektralbereiche, in denen die Strahlungsquelle für die Hinterleuchtung einerseits und Strahlungsquelle an der Deckplatte andererseits emittieren, sind bevorzugt vollständig voneinander getrennt, um eine gegenseitige Beeinflussung zu vermeiden. Die Hinterleuchtung erfolgt durch flächige Beleuchtung des elektrochromen Mediums oder der Flüssigkristalle von der der Trägerplatte zugewandten Seite aus.

Die flächige Beleuchtung kann aus einer an sich aus DE 32 23 706 bekannten lichtdurchlässigen Rasterplatte bestehen, die zwischen der Unterplatte und der Trägerplatte angeordnet ist, oder mit der Trägerplatte oder der Unterplatte der Zelle identisch ist. An mindestens einer der Stirnflächen dieser lichtdurchlässigen Rasterplatte ist eine Lichtquelle angeordnet. Die lichtdurchlässige Rasterplatte weist auf ihrer von der Trägerplatte abgewandten Seite eine lichtbrechende rasterförmige Oberflächenstruktur auf, an der das Licht aus dem Platteninneren stellenweise dosiert austritt. Durch eine gezielt gewählte Anordnungsdichte der Oberflächenstrukturen kann der Anteil des aus der Rasterplatte lokal austretenden Lichtes gesteuert werden. Auf diese Weise lässt sich eine ungleichmäßige Ausleuchtung innerhalb der Rasterplatte kompensieren. Durch eine Zunahme der Rasterdichte der Oberflächenstruktur mit zunehmendem Abstand von der Lichtquelle kann insbesondere die Schwächung des Lichtes mit zunehmendem Abstand von der Lichtquelle kompensiert werden. Die Oberflächenstruktur kann zum Beispiel mit dem Siebdruckverfahren aufgebracht werden. Zusätzlich ist auf oder über der strukturierten Seite eine als Leuchtfläche dienende Streuschicht angeordnet.

Die Anzeigevorrichtung kann als Kombination einer transmissiven und reflektiven Anzeige auch als halb durchlässige und halb reflektierende Anzeige mit zusätzlicher Lichtquelle ausgestaltet sein. In diesem Fall weist die Trägerplatte auf ihrer Innenseite eine Beschichtung auf, die sowohl für das sichtbare Licht der zusätzlichen Lichtquelle zur Hinterleuchtung wie auch für das Umgebungslicht halb reflektierend und halb durchlässig ist. Sie ist für das Licht, das von der Strahlungsquelle an der Deckplatte emittiert wird, überwiegend transparent. Die Anzeigevorrichtung ist mit einer eigenen flächig ausgedehnten Lichtquelle als Hinterleuchtung der Anzeige ausgestattet. Die Lichtquelle zur Hinterleuchtung kann ein- oder ausgeschaltet werden. Diese Anzeigevorrichtung ist sowohl in nahezu dunkler Umgebung mit Hinterleuchtung als auch bei hellem Tageslicht ohne Hinterleuchtung gut ablesbar.

Die Deckplatte ist bevorzugt mindestens 0,05 mm, besonders bevorzugt mindestens 0,5 mm dick. Sie kann aus jedem Material mit einer niedrigen Lichtschwächung im Spektralbereich der Strahlungsquelle bestehen. Bei der Beurteilung der Lichtschwächung muss die Länge, die der größten Ausdehnung der Platte entspricht, berücksichtigt werden. Bevorzugt ist ein Material, bei dem das Licht der Strahlungsquelle an einem Punkt der Deckplatte mit maximalem Abstand zur Quelle nicht mehr als 50 % geschwächt ist. Bevorzugte Materialien sind Silikatgläser, Quarzgläser oder transparente Polymere wie Polycarbonate, Polymethacrylate oder Polyester.

Um eine gute Totalreflexion des eingestrahlten Lichts in die Deckplatte zu gewährleisten, wird bevorzugt für die Deckplatte ein Material mit besonders hohem Brechungsindex verwendet, besonders bevorzugt Glas mit einem Brechungsindex über 1,6.

Zwischen der Deckplatte und der Oberplatte der elektrochromen Zelle oder der Flüssigkristallzelle kann ein Spalt sein, der eine Zwischenschicht bildet. Diese Zwischenschicht wird mit einem Material mit einem Brechungsindex, der kleiner als der Brechungsindex der Deckplatte ist, gefüllt, z.B. mit Luft oder mit durch UV-Strahlung polymerisierbare Gemische aus polyfunktionellen (Meth)Acrylsäurederivaten, monofunktionellen (Meth)Acrylsäureestem und geeigneten Fotoinitiatoren wie etwa in US 4 919 514 beschrieben. Ebenfalls bevorzugt sind über einen Sol-Gel-Prozess hergestellte feste Materialien mit einer Porosität von mehr als 50 % zum Beispiel basierend auf Silikaten, Aluminaten und anderen binären oder ternären Systemen (J. Fricke, A.Emmerling Aerogels-Preparation, Properties, Applications in R.Reisfeld, C.K.Joergensen (Ed.) Chemistry, Spectroscopy and Applications of Sol-Gel Glasses, Springer-Verlag 1992, S. 37-87).

Als Strahlungsquellen sowohl für die Beleuchtung der Deckplatte als auch für die Hinterleuchtung der Anzeige sind z.B. Wolframlampen, Licht emittierende Halbleiterdioden oder Halbleiter-Laserdioden geeignet. Der Bereich der spektralen Empfindlichkeit des Photoempfängers muss das Emissionspektrurn der Strahlungsquelle umfassen. Bevorzugt stimmen das Maximum der Empfindlichkeit des Photoempfängers und das Maximum im Emissionsspektrum der Strahlungsquelle überein. Als Photoempfänger sind Halbleiter-Photoempfänger bevorzugt. Besonders bevorzugt sind Silizium-Photodioden, Silizium-Phototransistoren und Silizium- oder Silizium/Metalloxid-charge-coupled-devices.

Um den Einfluss des Umgebungslichtes auf den Berührungssensor auszuschalten, kann zur Beleuchtung der Deckplatte eine Strahlungsquelle verwendet werden, deren Emissionsspektrum außerhalb des sichtbaren Spektrums liegt, z.B. im infraroten Spektralbereich bei einer Wellenlänge, die größer ist als 680 nm, bevorzugt größer als 780 nm und besonders bevorzugt größer als 850 um. Bevorzugt emittiert die Strahlungsquelle in einem Spektralbereich, in dem die Absorption der Anzeigevorrichtung niedrig ist und sich auch beim Umschalten der angezeigten Information nicht stark ändert. Bei Verwendung einer elektrochromen Zelle als Anzeigevorrichtung liegt dieser Spektralbereich bevorzugt bei Wellenlängen größer als 780 nm.

Eine zusätzliche Maßnahme zur Vermeidung von Fehlern, die z.B. durch das Umgebungslicht ausgelöst werden, ist der Einsatz der Lock-in-Technik (P.Cielo, Optical Techniques for Industrial Inspection, Academic Press San Diego 1988, p. 128-130). Die Strahlungsquelle wird in ihrer Strahlungsleistung periodisch mit der Zeit verändert mit der Frequenz f_{Q}. Von den elektrischen Signalen des Photoempfängers wird in einer nachgeschalteten elektronischen Einheit nur derjenige Teil des Signals weitergeleitet, der sich ebenfalls periodisch mit der Zeit und annähernd mit derselben Frequenz ändert wie die Strahlungsleistung der Strahlungsquelle. Durch die Wahl der Breite des akzeptierten Frequenzbandes Δf_{P}, des Signals aus dem Photoempfänger um die Frequenz f_{Q} kann die Trennung von erwünschten Signalen und Störsignalen optimiert werden. Bevorzugt ist eine relative Breite des akzeptierten Frequenzbandes Δf_{P}/f_{Q} von weniger als 0.1, besonders bevorzugt ist eine relative Breite Δf_{P}/f_{Q} von weniger als 0.01.

Der Raumwinkelbereich, in den die Strahlungsquelle abstrahlt, sollte bevorzugt an die beleuchtete Stirnfläche der Platte angepasst sein, um eine möglichst vollständige Einkopplung des Lichtes der Strahlungsquelle in die Platte zu erreichen.

Um besonders gute Reflexionen des eingestrahlten Lichts an den Stirnflächen der Platte zu erhalten, können eine oder mehrere der Stirnflächen mit einem optisch reflektierenden Material beschichtet sein. Diejenige Stirnfläche, die durch die Strahlungsquelle beleuchtet wird, ist von der Beschichtung ausgenommen. Durch die reflektierende Beschichtung der Stirnflächen wird das eingestrahlte Licht besonders häufig innerhalb der Platte reflektiert, das heißt, es wird effizient genutzt, und die Platte wird gleichmäßiger ausgeleuchtet. Bevorzugte Beschichtungen sind optisch reflektierende Metalle und Metallegierungen wie Gold, Silber, Kupfer, Nickel, Zinn oder Aluminium. Bevorzugte Beschichtungsverfahren sind physikalische Vakuumbeschichtungsverfahren wie Aufdampfen, Sputtern, Chemical Vapor Deposition (CVD) (David A. Glocker, Ismat Shah (Ed.) Handbook of Thin Film Process Technologie, Institute of Physics Publishing, Bristol and Philadephia 1995). Auch das Aufkleben von kommerziell erhältlichen metallbeschichteten Folien ist möglich.

Die Deckplatte kann in mehrere Berührungsfelder eingeteilt sein. Berührungsfelder sind Bereiche der Anzeigevorrichtung, denen eindeutig ein Photodetektor zugeordnet ist, in dessen photoempfindlichem Raumwinkelbereich nur dieser bestimmte Bereich der Anzeigevorrichtung liegt. Bei Berührung unterschiedlicher Berührungsfelder nehmen unterschiedliche Photodetektoren das durch die Berührung erzeugte Streulicht auf. Aus den Signalen der einzelnen Photodetektoren lässt sich rekonstruieren, welche Berührungsfelder beröhrt wurden. Der Abstand zweier benachbarter Berührungsfelder sollte nicht kleiner sein als der typische Durchmesser einer menschlichen Fingerkuppe von ca. 1 cm, um Fehlmeldungen zu vermeiden. Die Berührungsfelder können für den Berührenden erkennbar auf der Platte markiert sein oder durch die Anzeige dargestellt sein.

Der Berührungssensor kann auch ganz oder zeitlich begrenzt abgeschaltet werden. Dies ist vorteilhaft, um eine Fehlfünktion des Berührungssensors bei Berührungen zu vermeiden, die nicht dem vorgesehenen Zweck des Schaltens dienen, wie z.B. beim Reinigen. Die Abschaltung kann dadurch erfolgen, dass bei einer bestimmten zeitlichen Abfolge von Berührungen des Sensors die zugehörigen elektrischen Signale des oder der Photodetektoren in der nachgeschalteten Einheit zur Verarbeitung der elektronischen Signale eine Abschaltung auslösen. Die Abschaltung kann bedeuten, dass keine weiteren Signale weiterverarbeitet werden. Die Abschaltung kann zeitlich begrenzt sein oder kann durch eine weitere definierte Signalfolge wieder aufgehoben werden.

Zum Beispiel kann bei einer Ausführungsform der beanspruchten Vorrichtung, die nur ein Berührungsfeld enthält, die besondere zeitliche Abfolge des einen Signals darin bestehen, dass das Berührungsfeld innerhalb einer bestimmten Zeit, zum Beispiel von 5 Sekunden, genau dreimal hintereinander berührt wird. Bei einer Ausführungsform der beanspruchten Vorrichtung, die mindestens zwei Berührungsfelder enthält, kann die besondere zeitliche Abfolge von Signalen zum Beispiel darin bestehen, dass zwei bestimmte Berührungsfelder gleichzeitig und innerhalb einer bestimmten Zeit, zum Beispiel von 5 Sekunden, genau zweimal hintereinander berührt werden. Diese Signalfolge wird nun von der nachgeschalteten elektronischen Signalverarbeitungsvorrichtung so weiterverarbeitet, dass zum Beispiel für 1 Minute kein der Berührung eines Berühnrngsfeldes entsprechendes Signal weitergegeben wird.

Die erfindungsgemäße Anzeigevorrichtung mit Berührungssensor kann durch eine veränderte Positionierung des einen oder der mehreren Photoempfänger abgewandelt werden. Der oder die Photoempfänger können an den Stirnflächen der Deckplatte montiert sein. Wenn dann bei Berührung ein Teil des Lichts aus der Deckplatte herausgestreut wird, kann die Verringerung des Lichtsignals im Vergleich zur unberührten Platte vom Photoempfänger detektiert werden.

Die erfindungsgemäße Anzeigevorrichtung mit Berührungssensor zeichnet sich durch ihre Einfachheit im Aufbau aus. Sie enthält keinerlei bewegte Elemente. Sie kann mit geringem Aufwand hergestellt werden, hat eine lange Lebensdauer und ist schnell und einfach zu reinigen.

### Figuren und Beispiele

Die Figuren zeigen:
- Fig. 1: Elektrochrome Zelle als Anzeigevorrichtung mit Berührungssensor mit separater Deckplatte und Trägerplatte.
- Fig. 2: Elektrochrome Zelle als Anzeigevorrichtung mit Berührungssensor mit integrierter Deckplatte und Trägerplatte.
- Fig. 3: Flüssigkristallzelle als transmissive Anzeigevorrichtung mit Berührungssensor und Hinterleuchtung.

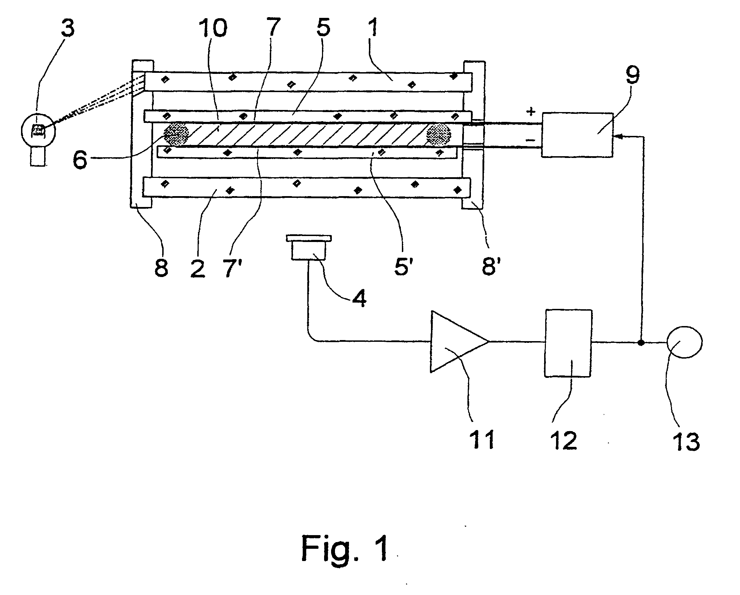

Das Ausführungsbeispiel in Fig. 1 zeigt eine elektrochrome Zelle als Anzeigevorrichtung mit Berührungssensor. Die elektrochrome Zelle, besteht aus einer transparenten Oberplatte 5 und einer transparenten Unterplatte 5' mit transparenten elektrisch leitfähigen Beschichtungen 7,7'. Die transparenten Platten 5,5' sind durch einen Dichtungsring 6 zu einer Zelle zusammengefügt. In dem so gebildeten Zellvolumen befindet sich das elektrochrome Medium 10. Die elektrochrome Zelle befindet sich zwischen einer transparenten Deckplatte 1 und einer transparenten Trägerplatte 2. An der Stirnfläche der transparenten Deckplatte 1 ist eine Strahlungsquelle 3 angeordnet, deren Licht in die Deckplatte 1 eintritt und diese ausleuchtet. Die Schwerpunktswellenlänge des von der Strahlungsquelle 3 ausgesandten Lichtes liegt zwischen 800 bis 1000 nm. Im Zentrum der Trägerplatte 2 ist ein Photoempfänger 4 montiert, in dessen photoempfindlichem Raumwinkelbereich die Deckplattenfläche liegt. Die maximale Empfindlichkeit des Photoempfängers liegt zwischen 800 bis 1000 nm. Die gesamte Anzeigevorrichtung wird durch Stirnplatten 8,8' zusammengehalten. Dazu wurden die Platten 1, 2, 5 und 5' in die Nuten der Stirnplatten 8,8' eingeführt und verklebt.

Die transparenten, elektrisch leitfähigen Beschichtungen 7,7' sind elektrisch leitend mit einer steuerbaren Spannungsquelle 9 verbunden. In Abhängigkeit ihres Eingangssignals gibt die Spannungsquelle 9 entweder die Spannung 0 Volt oder die Spannung 0,9 Volt ab und schaltet dadurch das elektrochrome Medium zwischen einem transparenten Zustand und einem Zustand um, in dem es sichtbares Licht überwiegend absorbiert. Licht aus dem Wellenlängenbereich 800 bis 1000 nm, wie es die Strahlungsquelle 3 aussendet, wird dagegen von dem elektrochromen Medium in beiden Zuständen nur wenig absorbiert.

Das Messsignal des Photoempfängers 4 wird über einen regelbaren Verstärker 11 an ein elektronisches Speicherelement 12 weitergeleitet. Charakteristisch für dieses Speicherelement ist, dass sein Ausgangssignal nur zwei diskrete Spannungswerte annehmen kann. Sie werden mit "aus" und "ein" bezeichnet. Jedesmal, wenn das Ausgangssignal aus dem Verstärker 11 einen bestimmten Schwellwert überschreitet, schaltet das Speicherelement 12 seinen Ausgangswert von "aus" nach "ein" um oder umgekehrt. Wird nun die Deckplatte 1 mit einem Finger in etwa mittig berührt, so leuchtet die Berührungszone im Licht der Strahlungsquelle 3 auf. Ein Teil dieses Lichtes wird von dem Photoempfänger 4 registriert und im Verstärker 11 verstärkt. Bei geeignet eingestellter Verstärkung des Verstärkers 11 reicht das so erzeugte Signal aus, um das Speicherelement 12 zum Beispiel von "aus" nach "ein" umzuschalten. Demzufolge schaltet die steuerbare Spannungsquelle 9 von der Spannung 0 Volt zur Spannung 0,9 Volt um und die elektrochrome Zelle wird dunkel. Durch Wegnehmen des Fingers und erneutes Berühren der Deckplatte kann die Anzeigevorrichtung wieder in den Zustand "aus" umgeschaltet werden, so dass die elektrochrome Zelle wieder transparent wird. Das elektrische Ausgangssignal aus dem Speicherelement 12 steht auch am Kontakt 13 zur Verfügung. Es kann zum Beispiel in einem Steuer- oder Regelungskreis zum Ein- und Ausschalten eines elektrischen Verbrauchers verwendet werden.

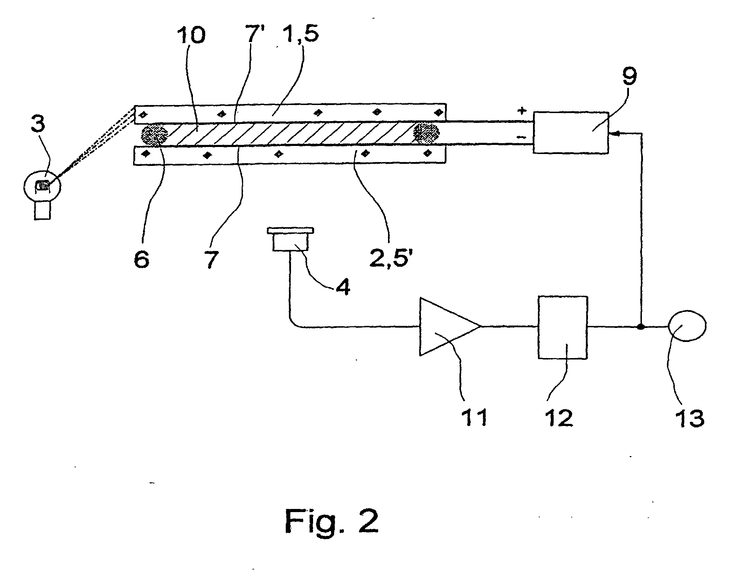

Fig. 2 zeigt ein zweites Ausführungsbeispiel für eine Anzeigevorrichtung mit Berührungssensor. Im Unterschied zu der in Fig. 1 dargestellten Anzeigevorrichtung ist hier die Deckplatte 1 mit der Oberplatte 5 der elektrochromen Zelle und die Trägerplatte 2 mit der Unterplatte 5' der elektrochromen Zelle identisch. Zum Zusammenhalt der Vorrichtung sind in diesem Ausführungsbeispiel keine Stimplatten 8,8' nötig.

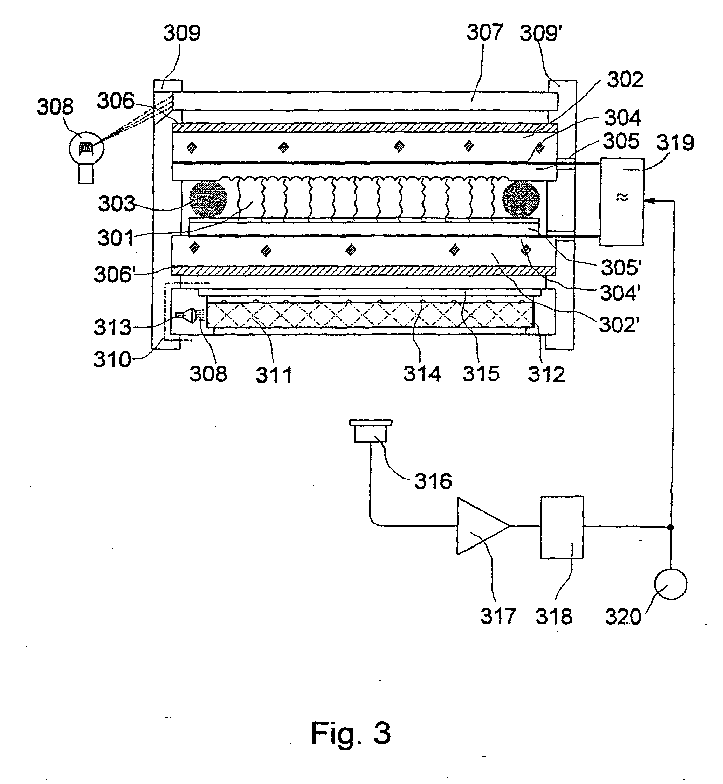

In Fig. 3 ist ein weiteres Ausführungsbeispiel für die Erfindung, eine Anzeigevorrichtung auf Basis einer transmissiven Flüssigkristallzelle mit einem Berührungssensor sowie einer Hinterleuchtung der Zelle dargestellt

Die Flüssigkristallzelle ist nach dem Prinzip des "twisted nematic liquid crystal displays" aufgebaut. Das flüssigkristalline Medium 301 befindet sich in einer Zelle, die aus einer transparenten Oberplatte 302 und einer transparenten Unterplatte 302' und einem Dichtungsring 303 gebildet wird. Die dem flüssigkristallinen Medium zugewandten Seiten der Platten 302 und 302' sind zum einen mit einer transparenten elektrisch leitfähigen Beschichtung 304 und 304' und außerdem mit jeweils einer sogenannten Orientierungsschicht 305 und 305' versehen. Die Orientierungsschichten 305 und 305' weisen eine Mikrostrukturierung der Oberfläche auf, die eine Vorzugsrichtung angibt, entlang der sich die Moleküle des flüssigkristallinen Mediums bevorzugt anordnen, solange nicht zusätzliche Kräfte auf sie wirken. Die Vorzugsrichtungen der beiden Orientierungsschichten 305 und 305' sind um 90° gegeneinander gedreht. Diese Drehung bewirkt, dass sich die Moleküle des flüssigkristallinen Mediums in der Zelle zwischen den Orientierungsschichten schraubenförmig ("twisted") anordnen.

Auf die dem flüssigkristallinen Medium nicht zugewandten Seiten der Oberplatte 302 und der Unterplatte 302' ist je eine Polarisationsfolie 306 und 306' aufgeklebt. Der in diesen Folien enthaltene Farbstoff zeigt im Wellenlängenbereich von 800 bis 1000 nm nur noch eine sehr schwache Absorption. Daher sind die Polarisationsfolien für Licht aus diesem Wellenlängenbereich unabhängig von dessen Polarisationsrichtung nahezu transparent.

Über der Oberplatte 302, aber ohne direkten Kontakt zu ihr, befindet sich eine Deckplatte 307, an deren Stirnfläche eine Strahlungsquelle 308 angeordnet ist, deren Licht in die Deckplatte 307 eintritt und diese ausleuchtet. Die Schwerpunktswellenlänge des von dieser Strahlungsquelle ausgesandten Lichtes liegt bei etwa 800 bis 1000 nm.

Die gesamte aus den Elementen 301 bis 306 bestehende Einheit wird zusammen mit der Deckplatte 307 durch die Stimplatten 309 und 309' zusammengehalten. Dazu wurden die Platten 302, 302' und 307 in die Nuten der Stirnplatten 309 und 309' eingeführt und verklebt. Die hier die Trägerplatte ersetzende Hinterleuchtungseinheit 310 ist ebenfalls in die dafür vorgesehenen Nuten in den Stirnplatten 309 und 309' eingeführt und mitverklebt worden.

Die Hinterleuchtungseinheit 310 besteht aus einer transparenten Rasterplatte 311, deren drei Stirnflächen mit einer aufgeklebten Aluminiumfolie 312 verspiegelt sind. Mittig zur vierten Stirnfläche der Rasterplatte 311 ist eine stabförmig ausgedehnte Lampe 313 angebracht, deren Licht in die Rasterplatte 311 eintritt und diese ausleuchtet. An der der Flüssigkristallzelle zugewandten Seite weist die transparente Rasterplatte 311 Oberflächenstrukturen 314 auf. Diese streuen das im Inneren der Rasterplatte 311 totalreflektierte Licht der Lampe 313 und strahlen diesen Lichtanteil von der Rasterplatte 311 ab in Richtung der Flüssigkristallzelle. Die Rasterdichte der Oberflächenstruktur 314 wird mit zunehmendem Abstand von der Lichtquelle größer. Die zwischen der Rasterplatte 311 und der Flüssigkristallzelle angebrachte Streuscheibe 315 dient der diffusen Streuung und damit der gleichmäßigen Verteilung des Lichtes. Durch die Hinterleuchtungseinheit wird eine außerordentlich gleichmäßige Ausleuchtung der Flüssigkristallzelle erreicht.

Unterhalb der Hinterleuchtungsvorrichtung ist etwa im Zentrum der Rasterplatte 311 ein Photoempfänger 316 montiert. Das Messsignal dieses Empfängers wird über einen regelbaren Verstärker 317 an ein elektronisches Speicherelement 318 mit Schwellwertverhalten und weiter an eine steuerbare Wechselspannungsquelle 319 der Frequenz 500 Hertz weitergeleitet. Die Ausgangssignalleitungen der Wechselspannungsquelle 319 sind mit den beiden leitfähigen Beschichtungen 304 und 304' der Platten 302 und 302' verbunden. Wenn das Speicherelement 318 den Wert "aus" weitergibt, beträgt das Ausgangssignal der Wechselspannungsquelle 319 0 Volt und die Flüssigkristallzelle ist hell geschaltet. Hat das Speicherelement 318 den Wert "ein", beträgt der Effektivwert der abgegebenen Wechselspannung 3 Volt und die Zelle ist dunkel. Das Ausgangssignal des Speicherelementes 318 steht am Kontakt 320 zur weiteren Verwendung zum Beispiel in einer Steuerungs- oder Regelungsanlage zur Verfügung.

Wird nun die Deckplatte 307 zum Beispiel mit einem Finger etwa mittig berührt, so leuchtet die Berührungszone im Licht der Strahlungsquelle auf. Unabhängig vom Schaltzustand der Flüssigkeitszelle gelangt der überwiegende Anteil des in den photoempfindlichen Raumwinkelbereich des Empfängers 316 fallenden Teils dieses Lichtes durch die gesamte Flüssigkristallzelle und auch durch die Hinterleuchtungseinheit 310 hindurch bis auf den Photoempfänger 316. Das Photoempfängersignal wird im Verstärker 317 verstärkt. Bei geeignet eingestellter Verstärkung des Verstärkers 317 reicht das so erzeugte Signal aus, um das Speicherelement 318 zum Beispiel von "aus" nach "ein" umzuschalten Die dann an der Zelle anliegende Wechselspannung von 3 Volt schaltet die Zelle dunkel. Durch Wegnehmen des Fingers und erneutes Berühren der Deckplatte kann die Anzeigevorrichtung wieder in den Zustand "aus" umgeschaltet werden.

## Patentansprüche

1. Anzeigevorrichtung mit Berührungssensor, bestehend aus einer elektrochromen Zelle oder einer Flüssigkristallzelle, wobei die elektrochrome Zelle aus einer transparenten Oberplatte (5) und einer transparenten Unterplatte (5') besteht, wobei die beiden Platten (5),(5') durch einen Dichtungsring (6) zu einer Zelle zusammengefügt sind und sich in dem Zellvolumen ein elektrochromes Medium (10) befindet und wobei die Platten (5),(5') auf ihren dem elektrochromen Medium zugewandten Seiten mit einer transparenten elektrisch leitfähigen Beschichtung (7'),(7) versehen sind, und wobei die elektrochrome Zelle oder die Flüssigkristallzelle sich zwischen einer transparenten Deckplatte (1) und einer transparenten Trägerplatte (2) befindet und an mindestens einer der Stirnflächen der transparenten Deckplatte (1) eine Strahlungsquelle (3) angeordnet ist, deren Licht in die Deckplatte (1) eintritt und diese ausleuchtet, und dass an der Trägerplatte (2) mindestens ein Photoempfänger (4) montiert ist, in dessen photoempfindlichem Raumwinkelbereich ein Teil oder die gesamte Deckplattenfläche liegt, **dadurch gekennzeichnet, dass** die elektrochrome Zelle oder die Flüssigkristallzelle eine Beschichtung der Unterplatte aufweist, die das sichtbare Licht überwiegend reflektiert, während sie für das von der Strahlungsquelle emittierte Licht überwiegend transparent ist.

2. Anzeigevorrichtung mit Berührungssensor nach Anspruch 1, **dadurch gekennzeichnet, dass** die Flüssigkristallzelle aus einer transparenten Oberplatte (302) und einer transparenten Unterplatte (302') besteht, die durch einen Dichtungsring (303) zusammengefügt sind und zwischen denen sich die Flüssigkristalle (301) befinden, wobei die einander zugewandten Seiten der Platten (302),(302') mit einer transparenten, elektrisch leitfähigen Beschichtung (304),(304') und mit einer Orientierungsschicht (305),(305') versehen sind und die voneinander abgewandten Seiten der Platten (302),(302') mit einer Polarisationsfolie (306),(306') versehen sind.

3. Anzeigevorrichtung mit Berührungssensor nach einem der Ansprüche 1 bis 2, **dadurch gekennzeichnet, dass** die elektrochrome Zelle oder die Flüssigkristallzelle eine Beschichtung der Unterplatte aufweist, die im Zentrum des photoempfindlichen Raumwinkelbereichs des Photodetektors eine für das Licht der Strahlungsquelle transparente Stelle enthält.

4. Anzeigevorrichtung mit Berührungssensor nach einem der Ansprüche 1 bis 2, **dadurch gekennzeichnet, dass** die elektrochrome Zelle oder die Flüssigkristallzelle eine halb durchlässige und halb reflektierende Beschichtung der Unterplatte aufweist.

5. Anzeigevorrichtung mit Berührungssensor nach einem der Ansprüche 1 bis 2 oder 5, **dadurch gekennzeichnet, dass** das elektrochrome Medium oder das flüssigkristalline Medium von der der Trägerplatte zugewandten Seite her flächig beleuchtet wird.

6. Anzeigevorrichtung nach Anspruch 5, **dadurch gekennzeichnet, dass** die flächige Beleuchtung durch eine lichtdurchlässige Rasterplatte realisiert wird, die zwischen der Unterplatte und der Trägerplatte angeordnet ist, wobei an mindestens einer der Stirnflächen der Rasterplatte eine Lichtquelle angeordnet ist und die Rasterplatte auf der von der Trägerplatte abgewandten Seite eine lichtbrechende rasterförmige Oberflächenstruktur zum stellenweise dosierten Austritt des Lichtes aus dem Platteninneren aufweist und wobei auf oder über dieser Seite eine als Leuchtfläche dienende Streuschicht angeordnet ist.

7. Anzeigevarrichtung nach Anspruch 6, **dadurch gekennzeichnet, dass** die Rasterdichte der Oberflächenstruktur der Rasterplatte mit zunehmendem Abstand von der Lichtquelle größer wird.

8. Anzeigevorrichtung nach Anspruch 6 oder 7, **dadurch gekennzeichnet, dass** die Rasterplatte mit der Trägerplatte oder mit der Unterplatte der elektrochromen Zelle oder der Flüssigkristallzelle identisch ist.

9. Anzeigevorrichtung mit Berührungssensor nach einem der Ansprüche 1 bis 8, **dadurch gekennzeichnet, dass** die Deckplatte eine Dicke von mindestens 0,05 mm hat.

10. Anzeigevorrichtung mit Berührungssensor nach einem der Ansprüche 1 bis 9, **dadurch gekennzeichnet, dass** die Deckplatte einen Brechungsindex von mindestens 1,5 hat.

11. Anzeigevorrichtung mit Berührungssensor nach einem der Ansprüche 1 bis 10, **dadurch gekennzeichnet, dass** sich zwischen der Oberplatte der elektrochromen Zelle oder der Flüssigkristallzelle und der Deckplatte eine Zwischenschicht befindet.

12. Anzeigevorrichtung mit Berührungssensor nach Anspruch 11, **dadurch gekennzeichnet, dass** die Zwischenschicht einen Brechungsindex aufweist, der kleiner ist als der Brechungsindex der Deckplatte.

13. Anzeigevorrichtung mit Berührungssensor nach Anspruch 11 oder 12, **dadurch gekennzeichnet, dass** die Zwischenschicht aus Luft oder aus durch UV-Strahlung polymerisierbare Gemische aus polyfunktionellen (Meth)Acrylsäurederivaten, monofunktionellen (Meth)Acrylsäureestern oder geeigneten Fotoinitiatoren, oder aus über einen Sol-Gel-Prozess hergestellten festen Materialien mit einer Porosität von mehr als 50 % basierend auf Silikaten, Aluminaten und anderen binären oder ternären Systemen besteht.

14. Anzeigevorrichtung mit Berührungssensor nach einem der Ansprüche 1 bis 8, **dadurch gekennzeichnet, dass** die Unterplatte der elektrochromen Zelle oder der Flüssigkristallzelle mit der Trägerplatte und/oder die Oberplatte mit der Deckplatte identisch ist.

15. Anzeigevorrichtung mit Berührungssensor nach einem der Ansprüche 1 bis 14, **dadurch gekennzeichnet, dass** die Strahlungsquelle ein Emissionsmaximum bei einer Wellenlänge größer als 680 nm hat.

16. Anzeigevorrichtung mit Berührungssensor nach einem der Ansprüche 1 bis 15, **dadurch gekennzeichnet, dass** die von der Strahlungsquelle beleuchtete Stirnfläche schwach streuend aufgerauht ist.

17. Anzeigevorrichtung mit Berührungssensor nach einem der Ansprüche 1 bis 16, **dadurch gekennzeichnet, dass** mindestens eine und maximal drei Stirnflächen der Deckplatte mit einem optisch reflektierenden Material beschichtet sind.

18. Anzeigevorrichtung mit Berührungssensor nach Anspruch 17, **dadurch gekennzeichnet, dass** als optisch reflektierendes Material Gold, Silber, Kupfer, Nickel oder Aluminium verwendet wird und die Schichten durch Aufdampfen, Sputtern, CVD oder Aufkleben von metallbeschichteten Folien hergestellt werden.

19. Anzeigevorrichtung mit Berührungssensor nach einem der Ansprüche 1 bis 18, **dadurch gekennzeichnet, dass** mehrere Photoempfänger an der Trägerplatte montiert sind, wobei im photoempfindlichen Raumwinkelbereich eines jeden Photoempfängers ein bestimmter Bereich der Deckplatte liegt, der dem Photoempfänger eindeutig zugeordnet ist.

20. Anzeigevorrichtung mit Berührungssensor nach einem der Ansprüche 1 bis 19, **dadurch gekennzeichnet, dass** jedem Photoempfänger eine Einheit zur Verarbeitung des elektrischen Signals nachgeschaltet ist.

21. Verfahren zur Berühungserkennung in der Anzeigevorrichtung mit Berührungssensor nach einem der Ansprüche 1 bis 20, **dadurch gekennzeichnet, dass** die Strahlungsleistung der Strahlungsquelle sich periodisch mit der Zeit mit der Frequenz f_{Q} ändert und das elektrische Signal des Photoempfängers in der Weise weiterverarbeitet wird, dass überwiegend nur der Teil des Signals bewertet wird, der sich ebenfalls periodisch mit der Zeit und annähernd mit derselben Frequenz f_{Q} ändert wie die Strahlungsleistung der Strahlungsquelle.

22. Verfahren zur Berührungserkennung in der Anzeigevorrichtung mit Berührungssensor nach Anspruch 21, **dadurch gekennzeichnet, dass** die relative Breite Δf_{P}/f_{Q} des bei der Weiterverarbeitung akzeptierten Frequenzbandes Δf_{P} des Signals aus dem Photoempfänger um die Frequenz f_{Q} weniger als 0.1 beträgt.

23. Verfahren zur Berühnmgserkennung in der Anzeigevorrichtung mit Berührungssensor nach einem der Ansprüche 1 bis 22, **dadurch gekennzeichnet, dass** der Berührungssensor ganz oder zeitlich begrenzt abgeschaltet werden kann und sich nach einer vorgegebenen Zeit selber wieder einschaltet oder durch eine bestimmte Signalfolge wieder eingeschaltet werden kann.

## Claims

1. Display device with touch sensor, consisting of an electrochromic cell or a liquid crystal cell, wherein the electrochromic cell consists of a transparent top plate (5) and a transparent bottom plate (5'), the two plates (5), (5') being joined together by a ring seal (6) to form a cell, and an electrochromic medium (10) being located in the cell volume, and the plates (5), (5') being provided with a transparent electrically conductive coating (7'), (7) on their sides facing the electrochromic medium, and the electrochromic cell or the liquid crystal cell is located between a transparent cover plate (1) and a transparent support plate (2), and a radiation source (3), whose light enters the cover plate (1) and illuminates it, is arranged on at least one of the end faces of the transparent cover plate (1), and at least one photodetector (4), in whose photosensitive solid angle range some or all of the cover plate surface lies, is mounted on the support plate (2), **characterized in that** the electrochromic cell or the liquid crystal cell has a coating on the bottom plate, which predominantly reflects visible light while it is predominantly transparent to the light emitted by the radiation source.

2. Display device with touch sensor according to Claim 1, **characterized in that** the liquid crystal cell consists of a transparent top plate (302) and a transparent bottom plate (302') which are joined together by a ring seal (303) and between which the liquid crystals (301) are located, the sides of the plates (302), (302') which face one another being provided with a transparent electrically conductive coating (304), (304') and with an orienting layer (305), (305'), and the sides of the plates (302), (302') which are remote from one another being provided with a polarization film (306), (306').

3. Display device with touch sensor according to either of Claims 1 and 2, **characterized in that** the electrochromic cell or the liquid crystal cell has a coating on the bottom plate which contains a location transparent to the light from the radiation source at the centre of the photosensitive solid angle range of the photodetector.

4. Display device with touch sensor according to either of Claims 1 and 2, **characterized in that** the electrochromic cell or the liquid crystal cell has a semitransmissive and semireflecting coating on the bottom plate.

5. Display device according to either of Claims 1 and 2 or 5, **characterized in that** the electrochromic medium or the liquid crystal medium is two-dimensionally illuminated from the side facing the support plate.

6. Display device according to Claim 5, **characterized in that** the two-dimensional illumination is carried out through an optically transparent grid plate which is arranged between the bottom plate and the support plate, a light source being arranged on at least one of the end faces of the grid plate and the grid plate having, on the side remote from the support plate, an optically refractive grid-like surface structure for positionally metered emergence of light from the interior of the plate, and a scattering layer serving as an illumination surface being arranged on or over this side.

7. Display device according to Claim 6, **characterized in that** the grid density of the surface structure of the grid plate becomes greater with increasing distance from the light source.

8. Display device according to Claim 6 or 7, **characterized in that** the grid plate is identical to the support plate or to the bottom plate of the electrochromic cell or of the liquid crystal cell.

9. Display device with touch sensor according to one of Claims 1 to 8, **characterized in that** the cover plate has a thickness of at least 0.05 mm.

10. Display device with touch sensor according to one of Claims 1 to 9, **characterized in that** the cover plate has a refractive index of at least 1.5.

11. Display device with touch sensor according to one of Claims 1 to 10, **characterized in that** an intermediate layer is located between the top plate of the electrochromic cell or of the liquid crystal cell and the cover plate.

12. Display device with touch sensor according to Claim 11, **characterized in that** the intermediate layer has a refractive index which is less than the refractive index of the cover plate.

13. Display device with touch sensor according to Claim 11 or 12, **characterized in that** the intermediate layer consists of air or UV radiation-polymerizable mixtures of polyfunctional (meth)acrylic acid derivatives, monofunctional (meth)acrylates or suitable photoinitiators, or of solid materials produced using a sol-gel process and having a porosity of more than 50% based on silicates, aluminates and other binary or ternary systems.

14. Display device with touch sensor according to one of Claims 1 to 8, **characterized in that** the bottom plate of the electrochromic cell or of the liquid crystal cell is identical to the support plate and/or the top plate is identical to the cover plate.

15. Display device with touch sensor according to one of Claims 1 to 14, **characterized in that** the radiation source has an emission maximum at a wavelength of more than 680 nm.

16. Display device with touch sensor according to one of Claims 1 to 15, **characterized in that** the end face illuminated by the radiation source is roughened so as to be weakly scattering.

17. Display device with touch sensor according to one of Claims 1 to 16, **characterized in that** at least one and at most three end faces of the cover plate are coated with an optically reflecting material.

18. Display device with touch sensor according to Claim 17, **characterized in that** gold, silver, copper, nickel or aluminium are used as the optically reflecting material, and the layers are produced by evaporation coating, sputtering, CVD or adhesive bonding of metal-coated films.

19. Display device with touch sensor according to one of Claims 1 to 18, **characterized in that** a plurality of photodetectors are fitted on the support plate, a specific region of the cover plate, which region is uniquely assigned to the photodetector, lying in the photosensitive solid angle range of each photodetector.

20. Display device with touch sensor according to one of Claims 1 to 19, **characterized in that** a unit for processing the electrical signal is connected downstream of each photodetector.

21. Method for touch recognition in the display device with touch sensor according to one of Claims 1 to 20, **characterized in that** the radiation power from the radiation source periodically varies with time at the frequency f_{Q}, and the electric signal from the photodetector is further processed such that predominantly only that part of the signal which likewise varies periodically with time and approximately varies at the same frequency f_{Q} as the radiation power from the radiation source is evaluated.

22. Method for touch recognition in the display device with touch sensor according to Claim 21, **characterized in that** the relative width Δf_{P}/f_{Q} of the frequency band Δf_{P} accepted during the further processing in the signal from the photodetector around the frequency f_{Q} is less than 0.1.

23. Method for touch recognition in the display device with touch sensor according to one of Claims 1 to 22, **characterized in that** the touch sensor can be switched off fully or for a limited time and, after a predetermined time, switches itself on again or can be switched on again by a specific signal sequence.

## Revendications

1. Dispositif d'affichage comportant un capteur tactile, constitué par une cellule à effet d'électrochrome ou une cellule à cristal liquide, dans lequel la cellule à effet d'électrochrome est constituée par une plaque supérieure transparente (5) et par une plaque inférieure transparente (5'), les deux plaques (5),(5') étant réunies au moyen d'une bague d'étanchéité (6) pour former une cellule, et un milieu à effet d'électrochrome (10) étant situé dans le volume de la cellule, et dans lequel les plaques (5), (5') sont pourvues, sur leurs faces tournées vers le milieu à effet d'électrochrome, de revêtements électriquement conducteurs transparents (7'),(7), et dans lequel la cellule à effet d'électrochrome ou la cellule à cristal liquide est située entre une plaque de revêtement transparente (1) et une plaque de support transparente (2), et une source de rayonnement (3), dont la lumière pénètre dans la plaque de revêtement (1) et éclaire cette dernière, est disposée sur au moins l'une des faces frontales de la plaque de revêtement transparente (1), et que sur la plaque de support (2) est monté au moins un photorécepteur (4), dans la plage angulaire spatiale photosensible duquel est disposée une partie ou la totalité de la surface de la plaque de revêtement, **caractérisé en ce que** la cellule à effet d'électrochrome ou la cellule à cristal liquide comporte un revêtement de la plaque inférieure, qui réfléchit dans une large mesure la lumière visible, tandis qu'elle est dans une large mesure transparente pour la lumière émise par la source de rayonnement.

2. Dispositif d'affichage comportant un capteur tactile selon la revendication 1, **caractérisé en ce que** la cellule à cristal liquide est constitué par une plaque supérieure transparente (302) et une plaque inférieure transparente (302'), qui sont réunies par une bague d'étanchéité (303) et entre lesquelles sont disposés les cristaux liquides (301), les faces, qui sont tournées l'une vers l'autre, des plaques (302),(302') sont pourvues d'un revêtement transparent électriquement conducteur (304),(304') et d'une couche d'orientation (305),(305'), et les faces, qui sont tournées à l'opposé l'une de l'autre, des plaques (302), (302') sont pourvues d'une feuille de polarisation (306), (306').

3. Dispositif d'affichage comportant un capteur tactile selon l'une des revendications 1 et 2, **caractérisé en ce que** la cellule à effet d'électrochrome ou la cellule à cristal liquide comporte un revêtement de la plaque inférieure, qui contient, au centre de la plage angulaire spatiale photosensible du photodétecteur, un emplacement transparent pour la lumière de la source de rayonnement.

4. Dispositif d'affichage comportant un capteur tactile selon l'une des revendications 1 et 2, **caractérisé en ce que** la cellule à effet d'électrochrome ou la cellule à cristal liquide possède un revêtement à moitié transparent et à moitié réfléchissant de la plaque inférieure.

5. Dispositif d'affichage comportant un capteur tactile selon l'une des revendications 1 et 2 ou 5, **caractérisé en ce que** le milieu à effet d'électrochrome ou le milieu à cristal liquide est éclairé en surface sur la face tournée vers la plaque de support.

6. Dispositif d'affichage selon la revendication 5, **caractérisé en ce que** l'éclairement de surface est réalisé au moyen d'une plaque tramée transparente, qui est disposée entre la plaque inférieure et la plaque de support, une source de lumière étant disposée au moins sur l'une des faces frontales de la plaque tramée, et la plaque tramée possédant, sur la face tournée à l'opposé de la plaque de support, une structure superficielle en forme de réseau réfringent pour réaliser une sortie, dosée par endroits, de la lumière à partir de l'intérieur de la plaque, et une couche diffusante utilisée en tant que surface d'éclairement étant disposée sur ou au-dessus de cette face.

7. Dispositif d'affichage selon la revendication 6, **caractérisé en ce que** la densité du réseau de la structure superficielle de la plaque tramée augmente lorsque la distance par rapport à la source de lumière augmente.

8. Dispositif d'affichage selon la revendication 6 ou 7, **caractérisé en ce que** la plaque tramée comportant la plaque de support est identique à la plaque inférieure de la cellule à effet d'électrochrome ou de la cellule à cristal liquide.

9. Dispositif d'affichage comportant un capteur tactile selon l'une des revendications 1 à 8, **caractérisé en ce que** la plaque de revêtement possède une épaisseur égale au moins à 0,05 mm.

10. Dispositif d'affichage comportant un capteur tactile selon l'une des revendications 1 à 9, **caractérisé en ce que** la plaque de revêtement possède un indice de réfraction égal au moins à 1,5.

11. Dispositif d'affichage comportant un capteur tactile selon l'une des revendications 1 à 10, **caractérisé en ce qu'**une couche intercalaire est située entre la plaque supérieure de la cellule à effet d'électrochrome ou de la cellule à cristal liquide et la plaque de revêtement.

12. Dispositif d'affichage comportant un capteur tactile selon la revendication 11, **caractérisé en ce que** la couche intercalaire possède un indice de réfraction qui est inférieur à l'indice de réfraction de la plaque de revêtement.

13. Dispositif d'affichage comportant un capteur tactile selon la revendication 11 ou 12, **caractérisé en ce que** la couche intercalaire est formée d'air ou d'un mélange, pouvant polymériser sous l'action du rayonnement ultraviolet, de dérivés polyfonctionnels de l'acide (méth)acrylique, d'esters monofonctionnels de l'acide (meth)acrylique ou de photo-initiateurs appropriés, ou par des matériaux solides, fabriqués au moyen d'un processus à sol-gel et présentant une porosité supérieure à 50 % sur la base de silicates, d'aluminates et d'autres systèmes binaires ou ternaires.

14. Dispositif d'affichage comportant un capteur tactile selon l'une des revendications 1 à 8, **caractérisé en ce que** la plaque inférieure de la cellule à effet d'électrochrome ou de la cellule à cristal liquide est identique à la plaque de support et/ou la plaque supérieure est identique à la plaque de revêtement.

15. Dispositif d'affichage comportant un capteur tactile selon l'une des revendications 1 à 14, **caractérisé en ce que** la source de rayonnement possède un maximum d'émission pour une longueur d'onde supérieure à 680 nm.

16. Dispositif d'affichage comportant un capteur tactile selon l'une des revendications 1 à 15, **caractérisé en ce que** la surface frontale éclairée par la source de rayonnement est rugueuse de manière à réaliser une faible dispersion.

17. Dispositif d'affichage comportant un capteur tactile selon l'une des revendications 1 à 16, **caractérisé en ce qu'**au moins une surface frontale et au maximum trois surfaces frontales de la plaque de revêtement sont recouvertes par un matériau réalisant une réflexion optique.

18. Dispositif d'affichage comportant un capteur tactile selon la revendication 17, **caractérisé en ce qu'**on utilise comme matériau réalisant une réflexion optique, de l'or, de l'argent, du cuivre, du nickel ou de l'aluminium et qu'on fabrique des couches par dépôt par évaporation, dépôt par pulvérisation, dépôt CVD ou collage de feuilles métallisées.

19. Dispositif d'affichage comportant un capteur tactile selon l'une des revendications 1 à 18, **caractérisé en ce que** plusieurs photorécepteurs sont montés sur la plaque de support, une zone déterminée de la plaque de revêtement, qui est associée de façon nette au photorécepteur, étant située dans la plage angulaire spatiale photosensible de chaque photorécepteur.

20. Dispositif d'affichage comportant un capteur tactile selon l'une des revendications 1 à 19, **caractérisé en ce qu'**une unité servant à traiter le signal électrique est branchée en aval de chaque photorécepteur.

21. Procédé pour l'identification d'un contact dans le dispositif d'affichage comportant un capteur tactile selon l'une des revendications 1 à 20, **caractérisé en ce que** la puissance de rayonnement de la source de rayonnement varie périodiquement dans le temps avec la fréquence f_{Q} et que le signal électrique du photorécepteur subit un traitement aval tel que de façon prépondérante seule est évaluée la partie du signal qui varie également périodiquement avec le temps et approximativement avec la même fréquence f_{Q} que la puissance de rayonnement de la source de rayonnement.

22. Procédé pour l'identification d'un contact dans le dispositif d'affichage comportant un capteur tactile selon la revendication 21, **caractérisé en ce que** la largeur relative Df_{P}/f_{Q} de la bande de fréquences Df_{P}, acceptée lors de la poursuite du traitement, du signal délivré par le photorécepteur autour de la fréquence f_{Q} est inférieure à 0,1.

23. Procédé pour identifier un contact dans le dispositif d'affichage comportant un capteur tactile selon l'une des revendications 1 à 22, **caractérisé en ce que** le capteur de contact peut être débranché complètement ou d'une manière limitée dans le temps et à nouveau branché au bout d'un intervalle de temps prédéterminé ou être à nouveau branché au moyen d'une suite déterminée de signaux.
